(19) Europäisches Patentamt
European Patent Office
Office européen des brevets

(11) **EP 2 085 255 B1**

(12) **FASCICULE DE BREVET EUROPEEN**

(45) Date de publication et mention
de la délivrance du brevet:
**18.04.2012 Bulletin 2012/16**

(51) Int Cl.:
**B60C 23/06** *(2006.01)*

(21) Numéro de dépôt: **09305096.1**

(22) Date de dépôt: **02.02.2009**

(54) **Procédé de calibration d'un signal de détection de crevasion d'un pneumatique d'un véhicule**

Verfahren zur Einstellung eines Signals zur Erkennung einer Reifenpanne eines Fahrzeugs

Method for calibrating a signal for detecting a puncture in a vehicle tyre

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **31.01.2008 FR 0850587**

(43) Date de publication de la demande:
**05.08.2009 Bulletin 2009/32**

(73) Titulaire: **Renault**
**92109 Boulogne Billancourt (FR)**

(72) Inventeurs:
• **Pothin, Richard**
**78760, JOUARS-PONCHARTRAIN (FR)**
• **De-Rinaldis, Alessandro**
**75018, PARIS (FR)**

(56) Documents cités:
**EP-A- 0 832 767     EP-A- 0 933 237**
**EP-A- 1 037 030     US-A- 5 724 266**

**Description**

**DOMAINE DE L'INVENTION**

La présente invention concerne un procédé de calibration d'un signal de détection du sous-gonflage d'au moins un des pneumatiques équipant les roues d'un véhicule, du type selon lequel on procède à la détection par une analyse des vitesses angulaires des roues.

**ARRIERE PLAN DE L'INVENTION**

La détection d'une crevaison par mesure indirecte (désignée par l'acronyme SDC c'est-à-dire système de détection de crevaison) constitue une action de prévention des risques d'accident.

A l'heure actuelle, les systèmes de monitorage indirect de la pression sont soit imprécis et limités (générant de fausses alarmes, ou ne permettant une détection qu'en ligne droite de l'existence d'un pneumatique fortement sous-gonflé, sans permettre la localisation de celui-ci), soit plus robustes mais plus coûteux (en termes de nombre de capteurs et de complexité des algorithmes).

En général, cette deuxième catégorie de dispositifs dépend du système de contrôle de la stabilité du véhicule (généralement désigné par l'acronyme ESP du terme anglo-saxon « Electronic Stability Program ») et nécessite de connaître à la fois la vitesse de lacet, l'accélération latérale et les vitesses des roues.

On cherche donc à mettre au point une méthode de calibration des signaux qui permette, pour tout système SDC, une amélioration de la détection des écarts de développé liés à une perte de pression du pneu.

Parmi les nombreux systèmes d'estimation existants, plusieurs consistent à estimer les pertes de pression au moyen de l'analyse du rayon des roues.

On peut citer à cet égard le document FR 2 664 536 qui permet de détecter un sous-gonflage, y compris dans des situations où d'autres phénomènes que la chute de pression induisent des variations du rayon de roulement. Ce système calcule une fonction linéaire des différences des puissances quadratiques des vitesses angulaires des roues du premier et du deuxième essieu, compare cette fonction à un seuil prédéfini et en déduit un éventuel sous-gonflage de l'un des pneus. Ce système permet d'identifier le ou les pneus défaillants ; il permet en outre de quantifier le sous-gonflage en pression. En revanche, il est basé sur des critères qui dépendent fortement du rayon de courbure de la trajectoire, même à faible accélération transversale.

D'autres documents, tels que DE 100 58 140, WO 98/52780 et WO 2006/005710, décrivent des systèmes basés également sur la variation du rayon des roues mais utilisant d'autres critères basés sur des comparatifs de vitesses de roues selon les diagonales, les côtés et les trains. Toutefois, ces systèmes nécessitent un apprentissage des seuils, qui peut durer de 1 à 3 minutes selon la performance demandée pour chaque intervalle de vitesse, et qui suppose que des conditions spécifiques sur la dynamique du véhicule soient remplies.

Le document WO 2005/051685 décrit par ailleurs une solution fondée sur le principe selon lequel il existe une relation entre la pression du pneu et sa vitesse angulaire. L'ensemble de ces relations est stockée dans un tableau qui contient des données obtenues de manière empirique. Lorsque la pression ainsi estimée atteint un seuil prédéfini, une alerte est déclenchée. Toutefois, cette solution n'est pas robuste vis-à-vis des changements de condition de conduite (routes, pneus, virages, etc.).

Dans un autre document, WO 2005/063513, l'algorithme évalue la moyenne des vitesses des roues et la compare à celle de chacune des roues. Si l'écart est trop élevé, un signal d'alerte est déclenché. Mais cette solution, si elle est très simple, semble peu fiable et peu robustes car des changements de conditions de conduite peuvent induire de nombreuses fausses alertes.

Le système décrit dans le document WO 2005/123423 compare également la moyenne des vitesses des roues avec la vitesse de chaque roue, mais prend également en compte les déformations de la route. A cet effet, un changement de pression soudain sur les roues avant est comparé, après un délai $\Delta t = L / V_{réf}$ (où L est la distance entre les deux essieux et $V_{réf}$ la vitesse du véhicule), à celui des roues arrière. Dans le cas où le profil de changement de pression n'est pas similaire, un signal d'alerte est déclenché. Toutefois, comme pour le système précédent, l'algorithme semble peu fiable.

Le brevet US 5,724,266 décrit un procédé d'initialisation d'un dispositif de surveillance de la pression des pneumatiques d'un véhicule automobile. L'initialisation a lieu alors que l'accélération latérale du véhicule automobile et/ou l'angle de braquage du volant sont inférieurs à des seuils donnés. L'initialisation se limite toutefois au calcul de coefficients de proportionnalité liant les vitesses des roues entre elles. Ces coefficients sont ensuite, après initialisation, utilisés pour déterminer la vitesse de rotation de chaque roue dans un procédé de contrôle de pression des pneumatiques. Ce dispositif nécessite de recaler le signal des différents pneumatiques sur un pneumatique de référence, ce qui peut conduire à des erreurs importantes.

Le document EP 0 832 767 décrit un système en accord avec le préambule de la revendication 7 et un procédé de détection d'une chute de pression dans un pneumatique d'un véhicule automobile. Ce procédé comprend une phase d'initialisation dans laquelle un appui sur un bouton permet le calcul de coefficients de proportionnalité liant les vitesses des roues les unes aux autres pour s'affranchir d'éventuelles différences de diamètre des roues du véhicule. Ces coefficients sont ensuite utilisés dans le procédé de détection qui prévoit de fournir une indication de détection de chute de pression ou non, seulement dans des conditions précises qui sont limitatives.

Enfin, le document EP 1 477 337 décrit la détection de la crevaison d'un ou plusieurs pneumatiques par une comparaison des vitesses des roues diagonalement opposées. Un écart du signal de la valeur de référence correspond à l'existence d'un ou plusieurs pneus dégonflés. Il est nécessaire d'effectuer au préalable une initialisation qui élimine les différences initiales des vitesses des roues non liées à des différences de pression. Dans cette phase d'initialisation, la roue avant gauche est définie comme roue de référence, et des coefficients de correction permettent de recaler les autres roues. Mais cette approche ne tient pas compte du fait que la roue avant gauche a une développée apparente plus petite que celle de l'arrière, en raison d'un glissement relatif lié à la traction. Par conséquent, une initialisation du système sur une faible adhérence pourrait rendre la calibration erronée.

L'un des buts de l'invention est donc de remédier à tous ces inconvénients des méthodes décrites ci-dessus et basées sur la comparaison des vitesses des roues, en proposant une méthode de calibration simple et robuste, et permettant notamment de s'affranchir des écarts de développée à pression égale entre les différentes roues.

## BREVE DESCRIPTION DE L'INVENTION

Conformément à l'invention, il est proposé un procédé de calibration d'un signal de détection du sous-gonflage d'au moins un des pneumatiques équipant les roues d'un véhicule, du type selon lequel on procède à la détection par une analyse des vitesses angulaires des roues, ledit procédé comprenant :

   a) la détection d'une situation de conduite favorable ;
   b) l'enregistrement dudit signal ;
   c) si la situation de conduite est favorable, calcul d'un décalage du signal ;
   d) calcul du signal calibré par différence entre le signal enregistré et ledit décalage.

La détection de la situation de conduite comprend avantageusement la vérification des conditions suivantes :

   (C1) : le volant est sensiblement centré
   (C2) : le véhicule est en ligne droite stabilisée
   (C3) : le couple moteur est stabilisé
   (C4) : il ne se produit aucun glissement lié à la traction
   (C5) : le système électronique de stabilité et le système antiblocage des roues sont désactivés.

La première condition est vérifiée si la valeur absolue de l'angle du volant est inférieure à un angle minimal prédéfini.

La deuxième condition est vérifiée si l'équation $\left|\dfrac{d}{dt}\big(Signal(t)\big)\right| \leq \varepsilon$ est respectée, $\varepsilon$ étant un seuil prédéfini.

La troisième condition est vérifiée si l'équation $\left|\dfrac{d}{dt}\big(\omega_{ref}\big)\right| \leq a_{\min}$ est respectée, $\omega_{\text{réf}}$ étant la vitesse de référence et $\alpha_{\min}$ étant une accélération minimale prédéfinie.

La quatrième condition est vérifiée si les équations $\left|\omega_1 - \omega_{ref}\right| \leq s_{\max}$ et $\left|\omega_2 - \omega_{ref}\right| \leq s_{\max}$ sont respectées, $\omega_1$ et $\omega_2$ étant respectivement les vitesses angulaires des roues avant gauche et droite et $S_{\max}$ étant un glissement relatif maximal prédéfini.

Le calcul du décalage du signal comprend le calcul, pendant une durée déterminée, de la moyenne du signal dudit signal.

Un autre objet de l'invention concerne un système de calibration d'un signal de détection du sous-gonflage d'au moins un des pneumatiques équipant les roues d'un véhicule, du type selon lequel on procède à la détection par une analyse des vitesses angulaires des roues, ledit système comprenant :

a) des capteurs de la vitesse angulaire desdites roues
b) des capteurs de l'angle de braquage desdites roues
c) des moyens d'enregistrement dudit signal en fonction des vitesses angulaires des roues
d) des moyens de détection d'une situation de conduite favorable
e) des moyens de calcul d'un décalage du signal enregistré
f) des moyens de calcul d'un signal calibré.

L'invention porte enfin sur un véhicule automobile comprenant des moyens d'enregistrement d'un signal de détection du sous-gonflage d'au moins un des pneumatiques du véhicule, des moyens de détection d'une situation de conduite favorable et des moyens de calcul d'un décalage du signal, permettant la mise en oeuvre du procédé de calibration décrit plus haut.

**BREVE DESCRIPTION DES DESSINS**

D'autres caractéristiques et avantages de l'invention ressortiront de la description détaillée qui va suivre, en référence aux dessins annexés sur lesquels :

- la figure 1 est une représentation schématique en vue de dessus d'un véhicule automobile,
- la figure 2 est un logigramme illustrant la méthode de calibration conforme à l'invention,
- la figure 3 illustre un exemple de signal où l'on met en oeuvre une calibration conforme à l'invention.

**DESCRIPTION DETAILLEE DE L'INVENTION**

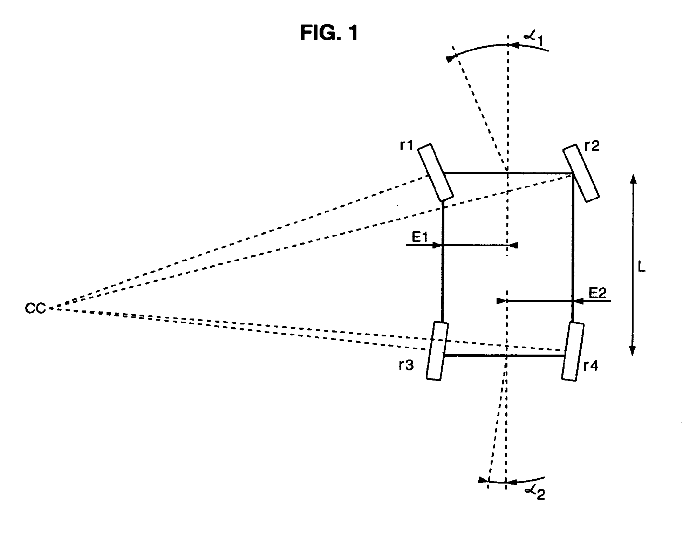

En référence à la figure 1, on référence respectivement par un indice i allant de à 4 les roues avant gauche, avant droite, arrière gauche et arrière droite, et par un indice j valant 1 ou 2 respectivement l'essieu avant et l'essieu arrière.
On note CC le centre de courbure de la trajectoire du véhicule, $r_i$ le rayon de roulement de la $i^{ème}$ roue (exprimé en mètres), $\alpha_j$ l'angle de braquage du $j^{ème}$ train (exprimé en degrés), $E_j$ la demi-voie du $j^{ème}$ essieu (exprimée en mètres) et L l'empattement du véhicule (exprimé en mètres).
Dans la suite du texte, on fera référence à un signal générique « Signal(t) », fonction du temps t.
Ce signal peut typiquement être du type des critères de détection de crevaison CR1 et CR2 définis dans la demande de brevet FR 2 664 536 déposée par la Demanderesse, et à laquelle on pourra se référer :

$$CR1 = \frac{k_1\left[E_1\left(\omega_1^2 - \omega_2^2\right) - E_2\left(\omega_3^2 - \omega_4^2\right)\right]}{\omega_{ref}^2}$$

$$CR2 = \frac{k_2\left[\cos\alpha_1\left(\omega_1 + \omega_2\right) - \cos\alpha_2\left(\omega_3 + \omega_4\right)\right]}{\omega_{ref}}$$

où:

$k_1$ et $k_2$ sont des coefficients de gain,
$\omega_i$ est la vitesse de rotation de la $i^{ème}$ roue (exprimée en rad/s)

$\omega_{ref} = \dfrac{\omega_3 + \omega_4}{2}$ est la vitesse de référence des roues du véhicule.

Le critère CR1 permet de déterminer dans quelle diagonale du train de pneumatiques se trouve un pneumatique en état de sous-gonflage.
Le critère CR2 permet quant à lui de déterminer le sous-gonflage et/ou la surcharge du train avant ou arrière de pneumatiques.
En règle générale, tous les systèmes SDC utilisent des signaux du même type que CR1 ou CR2.

De manière particulièrement avantageuse, la méthode de calibration conforme à l'invention ne fixe pas une roue de référence sur laquelle les vitesses des autres roues seraient recalées.

Au contraire, la présente méthode élimine du signal utilisé l'effet néfaste des écarts de développée à pression égale.

Un tel écart de développée, qui se traduit par un décalage ou offset du même signal, est calculé puis éliminé du signal.

La calibration des offset s'effectue lorsque les quatre pneus sont à la pression nominale - c'est-à-dire typiquement de l'ordre de 2,2 à 2,5 bar.

La calibration se décompose en deux tâches T1 et T2 :

- ■ T1 : détection de la bonne situation de conduite
- ■ T2 : calcul des offset et mise à jour du signal.

Détection de la bonne situation de conduite (T1)

Pour s'affranchir des différents phénomènes dynamiques qui peuvent influencer la mesure du rayon de roulement, on définit une série de conditions qui doivent être respectées et qui identifient une situation de conduite favorable.

Ces conditions sont les suivantes :

- ■ C1 : volant centré, se traduisant par l'équation :

$$\left|\alpha_{vol}\right| \le \alpha_{vol\_min}$$

où $\alpha_{vol\_min}$ est un angle volant minimal prédéfini ;
- ■ C2 : ligne droite stabilisée, se traduisant par l'équation :

$$\left|\frac{d}{dt}\big(Signal(t)\big)\right| \le \varepsilon$$

où $\varepsilon$ est un seuil prédéfini strictement positif ;
- ■ C3 : couple moteur stabilisé, se traduisant par l'équation :

$$\left|\frac{d}{dt}\big(\omega_{ref}\big)\right| \le a_{min}$$

où $a_{min}$ est une accélération minimale prédéfinie (exprimée en m/s$^2$);
- ■ C4 : absence de glissement lié à la traction, se traduisant par les équations :

$$\left|\omega_1 - \omega_{ref}\right| \le s_{max} \quad \text{et} \quad \left|\omega_2 - \omega_{ref}\right| \le s_{max}$$

où $s_{max}$ est un glissement relatif maximal prédéfini (exprimé en m/s) ;
- ■ C5 : absence d'activation de l'ESP ou de l'ABS (système anti-blocage des roues). Cette condition peut être vérifiée au moyen de la messagerie du CAN.

Calcul des offset et mise à jour (T2)

Si les conditions C1 à C5 sont satisfaites, on évalue l'offset sur les signaux par une simple intégration :

$$\Delta Signal_{offset} = \frac{1}{T} \int_{t0}^{t0+T} Signal(t)\,dt$$

où T est la période de temps pendant laquelle on détermine la moyenne de la valeur de Signal(t) et t0 est l'instant initial d'intégration.

Une fois calculée la valeur $\Delta signal_{offset}$, on met à jour le signal calibré par simple soustraction :

$$Signal_{calibré}(t) = Signal(t) - \Delta Signal_{offset}$$

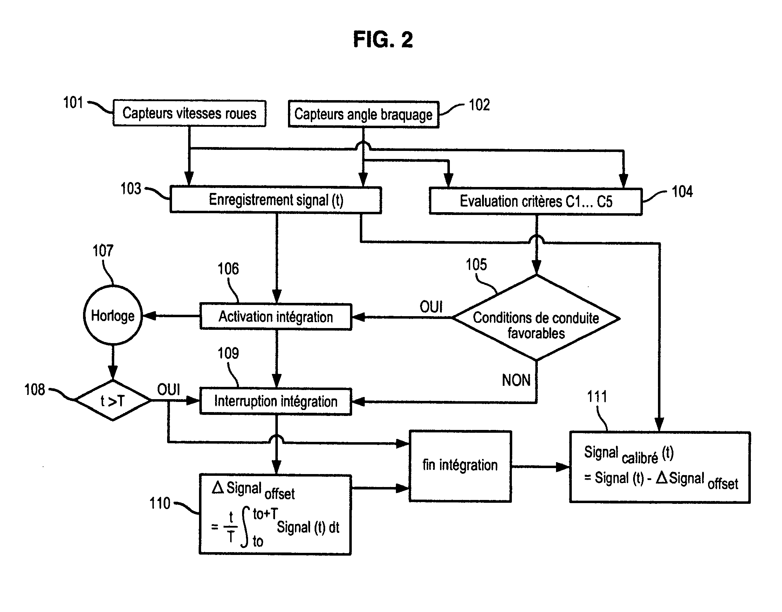

Le logigramme de la figure 2 illustre le fonctionnement logique de la méthode.

Des capteurs de vitesse angulaire de chaque roue (bloc 101) délivrent des signaux représentatifs des vitesses angulaires $\omega_i$ (i = 1 à 4). Ces capteurs sont bien connus de l'homme du métier et ne seront donc pas décrits de manière détaillée. Par ailleurs, des capteurs d'angle de braquage (bloc 102) - par exemple d'angle de braquage des roues, ou d'angle de volant - délivrent des signaux représentatifs des angles de braquage $\alpha_j$ (j = 1 ou 2). Ces différents signaux sont traités par un microprocesseur apte à en déduire le signal Signal(t) (bloc 103) et à calculer les données nécessaires à l'évaluation des conditions C1 à C5 (bloc 104), puis à vérifier la situation de conduite (bloc 105).

Si la situation de conduite est jugée favorable, on procède à l'intégration de Signal(t) (bloc 106) et on met en route une horloge (bloc 107) qui, lorsque la durée T prédéfinie est atteinte (bloc 108), interrompt l'intégration (bloc 109) et met fin au calcul de l'intégrale.

On calcule alors l'offset $\Delta Signal_{offset}$ (bloc 110) puis on calcule le signal calibré par différence entre le signal et l'offset (bloc 111).

Si au contraire la situation de conduite est jugée défavorable, on ne procède pas à l'intégration du signal et on désactive l'intégration (bloc 109).

Selon un deuxième mode de réalisation, on peut calculer l'offset $\Delta Signal_{offset}$ à l'intérieur d'une plage de vitesse [Vmin, Vmax] et ajouter aux conditions C1 à C5 une sixième condition où l'on vérifie que la vitesse de référence est comprise entre Vmin et Vmax.

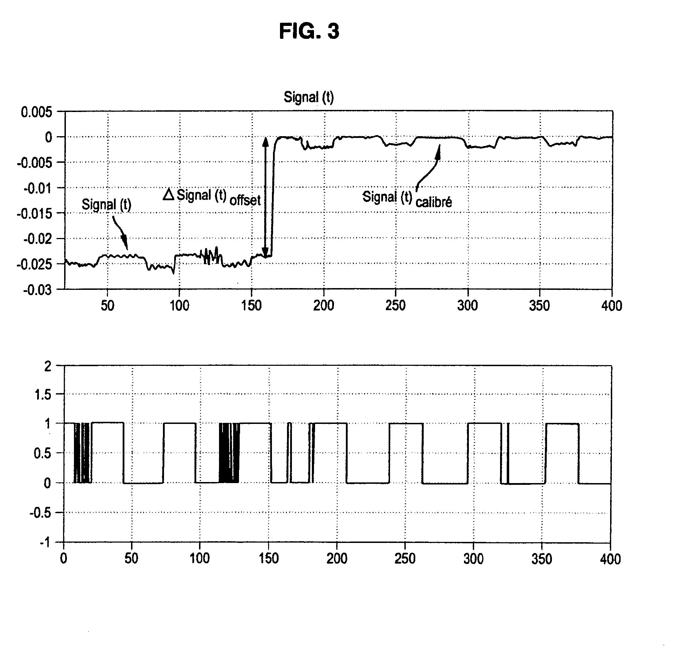

La figure 3 illustre un exemple de signal de type CR1 où l'on effectue une comparaison des vitesses des roues sur les deux diagonales.

Le graphique supérieur correspond à l'enregistrement du signal et au calcul du signal calibré, l'axe des abscisses correspondant au temps exprimé en secondes.

Le graphique inférieur en forme de créneaux illustre la situation de conduite ; la valeur 0 correspondant à une situation de conduite favorable et la valeur 1 correspondant à une situation de conduite défavorable.

Le signal représenté dans la partie gauche du graphique supérieur présente un certain offset bien que le véhicule soit dans une bonne situation de conduite. Cet offset correspond à une différence de rayon de roulement de la roue avant gauche de 4%.

En appliquant la méthode conforme à l'invention, on constate qu'après un intervalle de temps de l'ordre de 60 s en situation de conduite favorable, l'offset est détecté et le signal corrigé.

Exemple de mise en oeuvre de l'invention

Afin de montrer les avantages liés à l'utilisation de la méthode de calibration qui vient d'être décrite, on considère à titre d'exemple les critères CR1 et CR2 définis plus haut.

Tout écart des signaux CR1 ou CR2 par rapport à une valeur nulle est significatif d'une variation d'un ou plusieurs rayons de roulement, attribuable à une variation de pression dans un ou plusieurs pneumatiques.

Ces deux critères peuvent naturellement aussi être liés à des phénomènes dynamiques tels qu'un transfert de charge, une montée ou une descente, une accélération ou une décélération du véhicule, un glissement ou un patinage d'une ou plusieurs roues.

Il existe toutefois une situation de conduite favorable dans laquelle l'affirmation suivante est valable :

A1 : si la situation de conduite est favorable et si les rayons de roulement de chaque roue sont égaux, ce qui s'exprime par l'équation :

$$r_1 = r_2 = r_3 = r_4 = r_{nominal} \tag{I}$$

alors $CR1 \cong CR2 \cong 0$

Cependant, le principe énoncé par l'affirmation A1 n'est pas lié à la pression des pneus mais aux rayons de roulement.

Il se peut donc que les quatre pneumatiques aient la même pression, soit :

$$p_1 = p_2 = p_3 = p_4 = p_{nominale} \tag{II}$$

mais que l'équation (I) ne soit pas vérifiée.

Ceci étant, même dans une situation de conduite favorable, les signaux CR1 et CR2 pourraient avoir un offset tout en respectant la condition (II).

Typiquement, on peut arriver à un écart de rayon de roulement maximal sur un même type de pneu de 4% (cas illustré à la figure 3).

Si l'on considère qu'un dégonflage de 1 bar correspond à une variation de rayon de roulement de 0,3%, on comprend l'intérêt d'effectuer une calibration de tels offset afin de pouvoir détecter sans ambiguïté une crevaison.

## Revendications

1. Procédé de calibration d'un signal de détection du sous-gonflage d'au moins un des pneumatiques équipant les roues d'un véhicule, du type selon lequel on procède à la détection par une analyse des vitesses angulaires des roues, **caractérisé en ce qu'**il comprend :

   a) la détection d'une situation de conduite favorable comprenant la vérification des conditions suivantes :

   (C1) : le volant est sensiblement centré
   (C2) : le véhicule est en ligne droite stabilisée
   (C3) : le couple moteur est stabilisé
   (C4) : il ne se produit aucun glissement lié à la traction
   (C5) : le système électronique de stabilité et le système antiblocage des roues sont désactivés ;

   b) l'enregistrement dudit signal (Signal (t)) ;
   c) si les conditions C1-C5 de situation de conduite favorable sont satisfaites, calcul d'un décalage du signal ($\Delta Signal_{offset}$) ;
   d) calcul du signal calibré par différence entre le signal enregistré et ledit décalage.

2. Procédé selon la revendication 1, **caractérisé en ce que** la première condition (C1) est vérifiée si la valeur absolue de l'angle du volant ($\alpha_{vol}$) est inférieure à un angle minimal prédéfini ($\alpha_{vol\_min}$).

3. Procédé selon l'une des revendications 1 ou 2, **caractérisé en ce que** la deuxième condition (C2) est vérifiée si

   l'équation $\left| \dfrac{d}{dt}\big(Signal(t)\big) \right| \leq \varepsilon$ est respectée,

   $\varepsilon$ étant un seuil prédéfini.

4. Procédé selon l'une des revendications 1 à 3, **caractérisé en ce que** la troisième condition (C3) est vérifiée si

   l'équation $\left| \dfrac{d}{dt}\big(\omega_{ref}\big) \right| \leq a_{min}$ est respectée,

   $\omega_{réf}$ étant la vitesse de référence et $\alpha_{min}$ étant une accélération minimale prédéfinie.

**5.** Procédé selon l'une des revendications 1 à 4, **caractérisé en ce que** la quatrième condition (C4) est vérifiée si les équations $|\omega_1 - \omega_{ref}| \leq s_{max}$ et $|\omega_1 - \omega_{ref}| \leq s_{max}$ sont respectées, $w_1$ et $\omega_2$ étant respectivement les vitesses angulaires des roues avant gauche et droite et $s_{max}$ étant un glissement relatif maximal prédéfini.

**6.** Procédé selon l'une des revendications précédentes, **caractérisé en ce que** le calcul du décalage du signal comprend le calcul, pendant une durée déterminée (T), de la moyenne du signal dudit signal.

**7.** Système de calibration d'un signal de détection du sous-gonflage d'au moins un des pneumatiques équipant les roues d'un véhicule, du type selon lequel on procède à la détection par une analyse des vitesses angulaires des roues, comprenant:

a) des capteurs de la vitesse angulaires desdites roues
b) des capteurs de l'angle de braquage desdites roues
c) des moyens d'enregistrement dudit signal en fonction des vitesses angulaires des roues **caractérisé en ce qu'**il comprend :
d) des moyens de détection d'une situation de conduite favorable, par la vérification des conditions suivantes :

(C1) : le volant est sensiblement centré
(C2) : le véhicule est en ligne droite stabilisée
(C3) : le couple moteur est stabilisé
(C4) : il ne se produit aucun glissement lié à la traction
(C5) : le système électronique de stabilité et le système antiblocage des roues sont désactivés.

e) des moyens de calcul d'un décalage du signal enregistré
f) des moyens de calcul d'un signal calibré.

**8.** Véhicule automobile, **caractérisé en ce qu'**il comprend des moyens d'enregistrement d'un signal de détection du sous-gonflage d'au moins un des pneumatiques du véhicule, des moyens de détection d'une situation de conduite favorable et des moyens de calcul d'un décalage du signal, permettant la mise en oeuvre du procédé de calibration selon l'une des revendications 1 à 6.

**Claims**

**1.** Method for calibrating a signal for detecting the under-inflation of at least one of the tyres fitted to the wheels of a vehicle, of the type according to which the detection is carried out by an analysis of the angular speeds of the wheels, **characterized in that** it comprises:

a) the detection of a favourable driving situation comprising the verification of the hollowing conditions:

(C1): the steering wheel is substantially centred
(C2): the vehicle is travelling in a stable straight line
(C3): the engine torque is stable
(C4): no slippage associated with the drive wheels is occurring
(C5): the electronic stability control system and the wheel anti-blocking system are disabled;

b) the recording of the said signal (Signal (t));
c) if the conditions C1 C5 for a favourable driving situation are satisfied, calculation of an offset of the signal ($\Delta Signal_{offset}$);
d) calculation of the calibrated signal as the difference between the recorded signal and the said offset.

**2.** Method according to Claim 1, **characterized in that** the first condition (C1) is verified if the absolute value of the angle of the steering wheel ($\alpha_{vol}$) is less than a predefined minimum angle ($\alpha_{vol\_min}$).

**3.** Method according to either of Claims 1 and 2, **characterized in that** the second condition (C2) is verified if the

inequality $\left| \dfrac{d}{dt}(Signal(t)) \right| \leq \varepsilon$ is met, $\varepsilon$ being a predefined threshold.

4. Method according to one of Claims 1 to 3, **characterized in that** the third condition (C3) is verified if the inequality

$\left| \dfrac{d}{dt}(\omega_{ref}) \right| \leq a_{min}$ is met, ($\omega_{ref}$ being the reference speed and $\alpha_{min}$ being a predefined minimum acceleration.

5. Method according to one of Claims 1 to 4, **characterized in that** the fourth condition (C4) is verified if the inequalities $|\omega_1 - \omega_{ref}| \leq s_{max}$ and $|\omega_1 - \omega_{ref}| \leq s_{max}$ are met,
$\omega_1$ and $\omega_2$ being respectively the angular speeds of the front left-hand and right-hand wheels and $s_{max}$ being a predefined maximum relative slippage.

6. Method according to one of the preceding claims, **characterized in that** the calculation of the offset of the signal comprises the calculation, over a given period of time (T), of the mean of the said signal.

7. System for calibrating a signal for detecting the under-inflation of at least one of the tyres fitted to the wheels of a vehicle, of the type according to which the detection is carried out by an analysis of the angular speeds of the wheels, comprising:

   a) sensors for the angular speeds of the said wheels
   b) sensors for the turning angle of the said wheels
   c) means for recording said signal as a function of the angular speeds of the wheels
   **characterized in that** it comprises:
   d) means for detecting a favourable driving situation, by the verification of the following conditions:

      (C1): the steering wheel is substantially centred
      (C2): the vehicle is travelling in a stable straight line
      (C3): the engine torque is stable
      (C4): no slippage associated with the drive wheels is occurring
      (C5): the electronic stability system and the wheel anti-blocking system are disabled.

   e) means for calculating an offset of the recorded signal
   f) means for calculating a calibrated signal.

8. Motor vehicle, **characterized in that** it comprises means for recording a signal for detecting the under-inflation of at least one of the tyres of the vehicle, means for detecting a favourable driving situation and means for calculating an offset of the signal, allowing the implementation of the calibration method according to one of Claims 1 to 6.

**Patentansprüche**

1. Verfahren zur Kalibrierung eines Signals der Erfassung des Unterdrucks mindestens eines der die Räder eines Fahrzeugs bestückenden Luftreifens, von der Art, gemäß der die Erfassung durch eine Analyse der Winkelgeschwindigkeiten der Räder durchgeführt wird, **dadurch gekennzeichnet, dass** es enthält:

   a) die Erfassung einer günstigen Fahrsituation, die die Erfüllung der folgenden Bedingungen enthält:

      (C1): das Lenkrad ist im Wesentlichen zentriert
      (C2): das Fahrzeug ist in einer stabilisierten Geradeausstellung
      (C3): das Motordrehmoment ist stabilisiert
      (C4): es entsteht kein mit dem Antrieb verbundener Schlupf
      (C5): das elektronische Stabilitätssystem und das Antiblockiersystem der Räder sind deaktiviert;

   b) die Aufzeichnung des Signals (Signal(t));
   c) wenn die Bedingungen C1-C5 der günstigen Fahrsituation erfüllt sind, Berechnung einer Verzögerung des

Signals ($\Delta Signal_{offset}$);

d) die Berechnung des kalibrierten Signals durch die Differenz zwischen dem aufgezeichneten Signal und der Verzögerung.

**2.** Verfahren nach Anspruch 1, **dadurch gekennzeichnet, dass** die erste Bedingung (C1) erfüllt ist, wenn der Absolutwert des Winkels des Lenkrads ($\alpha_{vol}$) geringer als ein vordefinierter Mindestwinkel ($\alpha_{vol\_min}$) ist.

**3.** Verfahren nach einem der Ansprüche 1 oder 2, **dadurch gekennzeichnet, dass** die zweite Bedingung (C2) erfüllt ist, wenn die Gleichung $\left| \dfrac{d}{dt}\big(Signal(t)\big) \right| \leq \varepsilon$ eingehalten wird, wobei $\varepsilon$ eine vordefinierte Schwelle ist.

**4.** Verfahren nach einem der Ansprüche 1 bis 3, **dadurch gekennzeichnet, dass** die dritte Bedingung (C3) erfüllt ist, wenn die Gleichung $\left| \dfrac{d}{dt}\big(\omega_{ref}\big) \right| \leq \alpha_{\min}$ eingehalten wird, wobei $\omega_{ref}$ die Bezugsgeschwindigkeit und $\alpha_{\min}$ eine vordefinierte Mindestbeschleunigung ist.

**5.** Verfahren nach einem der Ansprüche 1 bis 4, **dadurch gekennzeichnet, dass** die vierte Bedingung (C4) erfüllt ist, wenn die Gleichungen $|\omega_1 - \omega_{ref}| \leq s_{max}$ $S_{max}$ und $|\omega_2 - \omega_{ref}| \leq s_{max}$ eingehalten werden, wobei $\omega_1$ und $\omega_2$ die Winkelgeschwindigkeiten der linken bzw. rechten Vorderräder sind und $s_{max}$ ein vordefinierter maximaler Schlupf ist.

**6.** Verfahren nach einem der vorhergehenden Ansprüche, **dadurch gekennzeichnet, dass** die Berechnung der Verzögerung des Signals die Berechnung, während einer bestimmten Dauer (T), des Msittelwerts des Signals ist.

**7.** System zur Kalibrierung eines Erfassungssignals des Unterdrucks mindestens eines die Räder eines Fahrzeugs bestückenden Luftreifens, von der Art, gemäß der die Erfassung durch eine Analyse der Winkelgeschwindigkeit der Räder durchgeführt wird, das enthält:

   a) Sensoren der Winkelgeschwindigkeit der Räder
   b) Sensoren des Einschlagwinkels der Räder
   c) Einrichtungen zur Aufzeichnung des Signals abhängig von den Winkelgeschwindigkeiten der Räder
   **dadurch gekennzeichnet, dass** es enthält:
   d) Einrichtungen zur Erfassung einer günstigen Fahrsituation durch die Erfüllung der folgenden Bedingungen:

      (C1): das Lenkrad ist im Wesentlichen zentriert
      (C2): das Fahrzeug ist in einer stabilisierten Geradeausstellung
      (C3): das Motordrehmoment ist stabilisiert
      (C4): es entsteht kein mit dem Antrieb verbundener Schlupf
      (C5): das elektronische Stabilitätssystem und das Antiblockiersystem der Räder sind deaktiviert,

   e) Einrichtungen zur Berechnung einer Verzögerung des aufgezeichneten Signals
   f) Einrichtungen zur Berechnung eines kalibrierten Signals.

**8.** Kraftfahrzeug, **dadurch gekennzeichnet, dass** es Einrichtungen zur Aufzeichnung eines Soignals der Erfassung des Unterdrucks mindestens eines der Luftreifen des Fahrzeugs, Einrichtungen zur Erfassung einer günstigen Fahrsituation und Einrichtungen zur Berechnung einer Verzögerung des Signals enthält, die die Durchführung des Kalibrierungsverfahrens nach einem der Ansprüche 1 bis 6 erlauben.

**FIG. 1**

## FIG. 2

101 — Capteurs vitesses roues    Capteurs angle braquage — 102

103 — Enregistrement signal (t)    Evaluation critères C1... C5 — 104

107 Horloge

106 — Activation intégration    OUI    105 — Conditions de conduite favorables

108 — t >T    OUI    109 — Interruption intégration    NON

110 — $\Delta\,\text{Signal}_{offset} = \dfrac{t}{T}\displaystyle\int_{to}^{to+T}\text{Signal (t) dt}$

fin intégration

111 — $\text{Signal}_{calibré}\,(t) = \text{Signal (t)} - \Delta\,\text{Signal}_{offset}$

EP 2 085 255 B1

12

# FIG. 3

Signal (t)

Signal (t)

$\Delta$ Signal (t) $_{offset}$

Signal (t) $_{calibré}$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2664536
- DE 10058140
- WO 9852780 A
- WO 2006005710 A
- WO 2005051685 A
- WO 2005063513 A
- WO 2005123423 A
- US 5724266 A
- EP 0832767 A
- EP 1477337 A